# EUROPÄISCHE PATENTSCHRIFT

(11) **EP 0 808 239 B1**
(45) Veröffentlichungstag und Bekanntmachung des Hinweises auf die Patenterteilung: **22.09.1999**
(21) Anmeldenummer: 96939009.5
(22) Anmeldetag: 12.11.1996
(51) Int. Cl.: B29C 45/17

(54) **FORMSCHLIESSVORRICHTUNG FÜR EINE KUNSTSTOFFORMMASCHINE, INSBESONDERE EINE SPRITZGIESSMASCHINE**
MOULD-CLAMPING DEVICE FOR A PLASTICS MOULDING MACHINE, IN PARTICULAR AN INJECTION MOULDING MACHINE
DISPOSITIF DE FERMETURE DE MOULE POUR UNE MACHINE DE MOULAGE DE MATIERES PLASTIQUES, NOTAMMENT POUR UNE PRESSE D'INJECTION

(30) Priorität: 09.12.1995 DE 19545980
(43) Veröffentlichungstag der Anmeldung: 26.11.1997
(73) Patentinhaber: Krauss-Maffei Aktiengesellschaft, 80997 München (DE)
(72) Erfinder: WOHLRAB, Walter, D-91781 Weissenburg (DE)
(74) Vertreter: Rucker, Bernd, Dipl.-Ing.
(86) Internationale Anmeldenummer: EP9604941
(87) Internationale Veröffentlichungsnummer: WO9721529

(56) Entgegenhaltungen:
- DE-U- 9 421 299
- FR-A- 1 582 478

## Beschreibung

Die Erfindung betrifft eine Formschließvorrichtung für eine Kunststofformmaschine von der im Oberbegriff des Anspruchs 1 angegebenen Art. Die Erfindung ist vorzugsweise bei einer Spritzgießmaschine anwendbar, wobei in diesem Fall nur eine bewegliche Formaufspannplatte vorgesehen ist und eine der beiden Festplatten als feststehende Formaufspannplatte ausgebildet ist. Die andere Festplatte ist die Abstützplatte des Schließantriebs. Die Erfindung ist aber auch anwendbar bei Formschließvorrichtungen, die zwei bewegbare Formaufspannplatten aufweisen, die von zwei Antriebseinheiten gegeneinander bewegbar sind. Beide Festplatten sind dann Abstützplatten für die beiden schließantriebe. Diese Bauart ist insbesondere bei Blasformmaschinen anzutreffen.

Die von dem Schließantrieb für das Schließen der Form ausgeübte Kraft wirkt auf die beiden Festplatten als eine sie auseinanderdrückende Reaktionskraft. Zusätzlich übt der in die geschlossene Form injizierte Kunststoff eine die Formhälften auseinanderdrückende Auftreibkraft aus, die ebenfalls von den Festplatten aufgenommen werden muß. Die beiden Festplatten müssen deshalb durch ausreichend dimensionierte Zugglieder verbunden sein, die eine Auseinanderbewegung der Festplatten und damit insbesondere ein Öffnen der Form unter dem Einspritzdruck verhindern.

Bei Spritzgießmaschinen tradioneller Bauart bestehen die Zugglieder aus vier geradlinigen Holmen oder Säulen, die die beiden Festplatten, d.h. in der Regel die feststehende Formaufspannplatte und die den Schließzylinder tragende Abstützplatte, miteinander verbinden und in den Eckbereichen dieser Platten befestigt sind. Damit wird eine zuverlässige gegenseitige Abstützung der Festplatten mit gleichmäßiger Kräfteverteilung über die Fläche dieser Platten erzielt, die ein Öffnen der Form unter dem Einspritzdruck zuverlässig verhindern kann, und zwar auch dann, wenn aufgrund der Gestaltung der Spritzform der Einspritzdruck unsymmetrisch zur Mittelachse der Form wirkt. Die Verwendung von geraden Holmen oder Säulen als Zugglieder hat aber den Nachteil, daß insbesondere die beiden vom Rahmen entfernten Holme den freien Zugang zum Raum zwischen den Festplatten behindern. Damit wird insbesondere die Verwendung eines Handlinggerätes erschwert, das zwischen die geöffneten Formen eingefahren werden soll, um die fertig geformten Artikel zu entnehmen.

Die vorliegend verwendete Bezeichnung "Festplatten" bedeutet, daß die Platten in Betrieb im wesentlichen stationär sind und bei der Öffnungs- und Schließbewegung der Formwerkzeuge nicht mitbewegt werden. In der Regel ist aber mindestens eine dieser Festplatten, evtl. auch beide, am Maschinenrahmen derart begrenzt verschiebbar gelagert, daß sie unter dem Einfluß der Schließkraft kleine Verschiebungsbewegungen in Längsrichtung der Maschine zum Ausgleich der Längenänderungen der Zugglieder ausführen kann.

Um eine Behinderung des Zugangs zu dem Raum zwischen den Formen zu vermeiden, sind sogenannte holmlose Spritzgießmaschinen vorgeschlagen worden. Diese haben anstelle der geradlinigen Holme oder Säulen auf jeder Seite der Maschine ein C-förmiges Zugglied, welches die beiden Festplatten miteinander verbindet und im Bereich zwischen den Festplatten im wesentlichen unterhalb der Oberkante des Maschinenrahmens verläuft und dadurch den Raum zwischen den Festplatten zugänglich läßt. Eine derartige holmlose Spritzgießmaschine ist z.B. aus EP 0 554 068 bekannt. Die Anwendung des gleichen Prinzips mit C-förmigen Zuggliedern bei einer Kunststofformmaschine mit Zwei gegeneinander beweglichen Formaufspannplatten, insbesondere einer Blasformmaschine ist aus US-A-3 787 165 bekannt. Es ist ferner aus DE 44 11 649 A1 bekannt, derartige C-förmige Zugglieder aus mehreren Teilen, z. B. aus zwei miteinander verbundenen L-förmigen Teilen zusammenzusetzen. Das ändert aber nichts daran, daß die L-förmigen Teile zusammen ein C-förmiges Glied bilden, das nur an zwei Punkten mit den Festplatten verbunden ist.

Es ist ferner bekannt, auf die Verwendung von gesonderten Zuggliedern ganz zu verzichten und die beiden Festplatten unmittelbar an dem entsprechend C-förmig ausgebildeten Maschinenrahmen abzustützen, wie z.B. in DE-U-92 12 480.1.

Die Einleitung der Schließ-Reaktionskräfte in ein C-förmiges Zugglied oder einen C-förmigen Maschinenrahmen hat aber zur Folge, daß die unvermeidliche Verformung des C-Gliedes mit einem Aufspreizen der C-Schenkel, d.h. mit einer Winkeländerung der C-Schenkel verbunden ist. Damit dies nicht zu einer entsprechenden Winkeländerung zwischen den Festplatten, d.h. zu einem Verlust der Parallelität der Festplatten führt, ist bei den oben genannten Konstruktionen vorgesehen, daß die beiden Festplatten in ihrer Mitte um eine horizontale Achse kippbar mit den C-förmigen Zuggliedern bzw. mit dem Maschinenrahmen verbunden sind. Damit haben die beiden Festplatten zwar die Freiheit, unabhängig von Verformungen der C-förmigen Zugglieder oder des Maschinenrahmens ihre Parallelstellung zueinander beizubehalten. Aufgrund ihrer freien Kippbarkeit um die horizontale Achse können die beiden Festplatten, und damit die mit ihnen verbundenen Formwerkzeuge, durch Auftreibkräfte, die exzentrisch zur Mittelachse des Formwerkzeuges wirken, um diese horizontale Achse derart verkippt werden, daß sich der Spalt zwischen den Formwerkzeugen einseitig öffnet, was zu einem Austritt der Kunststoffschmelze in den Spalt und zu Gratbildung am gespritzten Formstück fuhren kann. Bei den bekannten Konstruktionen wird daher der Vorteil des unbehinderten Zugangs zu dem Raum zwischen den Festplatten erkauft durch den Nachteil, daß die Vorrichtung gegen einseitiges Aufdrücken der Formwerkzeuge anfällig ist.

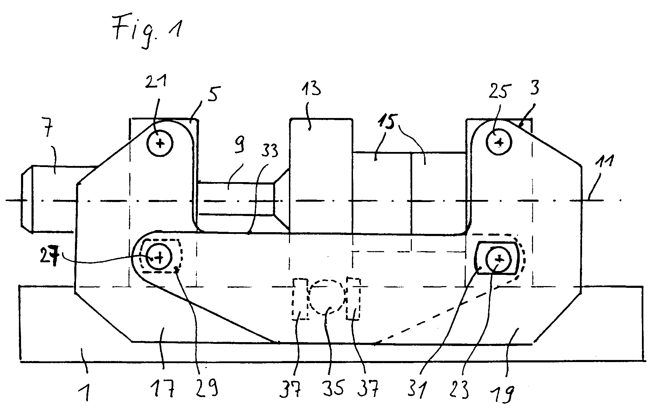

Der Oberbegriff des Anspruchs 1 bezieht sich auf die üblichen Formschließvorrichtungen mit vier geradlinigen Holmen zwischen den Festplatten. Eine weitere Vorrichtung, die ebenfalls die Merkmale des Oberbegriffs des Anspruchs 1 aufweist, ist in DE 94 21 299 U1 anhand von Fig. 1 beschrieben. Hier befinden sich beiderseits der Festplatten je zwei C-förmige Zugglieder, die den Zugang zu dem Raum zwischen den Festplatten nicht behindern. Diese beiden C-förmigen Zugglieder sind aber, damit sie exakt gleiche Elongation aufweisen, von exakt gleicher Form und Größe. Dies bedeutet, daß auch das untere der beiden C-förmigen Zugglieder weiter nach unten gezogen werden muß, als es für den Zugang zum Raum zwischen den Festplatten erforderlich wäre, so daß die gesamte Vorrichtung nach unten hin viel Platz benötigt. Ebenfalls in DE 94 21 299 U1 sind in Fig. 2 und 3 Ausführungsformen dargestellt, bei denen auf jeder Seite der Festplatten zwei Zugglieder ungleicher Form angeordnet sind, wodurch sich eine Platzersparnis ergibt. Es ist jedoch schwierig, diese Zugglieder bei ungleicher Form so auszugestalten, daß sie unter der Formschließkraft exakt das gleiche Elongationsverhalten aufweisen.

Der Erfindung liegt die Aufgabe zugrunde, eine Vorrichtung der genannten Art mit einer neuartigen Gestaltung und Anordnung der die Festplatten verbindenden Zugglieder vorzuschlagen, die den Zugang zu dem Raum zwischen den Festplatten nicht behindert, die Festplatten aber zuverlässig und exakt in der parallelen Ausrichtung hält.

Die erfindungsgemäße Lösung der Aufgabe ist in Anspruch 1 angegeben. Die Unteransprüche beziehen sich auf vorteilhafte weitere Ausgestaltungen der Erfindung.

Während bei allen bisher bekannten Formschließvorrichtungen die beiden Angriffspunkte jedes Zuggliedes an den beiden Festplatten in gleicher Höhe liegen, d. h. entweder in mittlerer Höhe bei nur einem Zugglied oder in den beiden oberen Ecken bzw. den beiden unteren Ecken bei jeweils zwei Zuggliedern ist erfindungsgemäß vorgesehen, daß jedes Zugglied einen unteren Angriffspunkt der einen Festplatte mit einem oberen Angriffspunkt der anderen Festplatte verbindet. Da alle Zugglieder identische Formgebung haben, haben sie auch bei auf die Festplatten ausgeübter Schließkraft die gleiche Elongation. Damit ändern sich auch die Abstände zwischen den Verbindungspunkten der Festplatten mit den Zuggliedern im gleichen Ausmaß, d. h. die Festplatten bleiben zueinander exakt parallel. Da andererseits jede Festplatte mit den Zuggliedern an oberen und unteren Verbindungspunkten verbunden ist, kann sie nicht frei um eine horizontale Achse kippen, sondern wird von den Zuggliedern in vertikaler Ausrichtung gehalten.

Eine Ausführungsform der Erfindung wird anhand der Zeichnungen näher erläutert. Es zeigt
- Fig. 1: eine schematische Seitenansicht einer Formschließvorrichtung für eine Spritzgießmaschine gemäß einer Ausführungsform der Erfindung.

Die Vorrichtung gemäß Fig. 1 hat einen Maschinenrahmen 1. Auf diesem sind zwei Festplatten 3, 5 abgestutzt, die sich mit Abstand parallel gegenüberstehen. Die eine Festplatte 3 ist als feststehende Formaufspannplatte ausgebildet und am Maschinenrahmen 1 unvorschiebbar befestigt. Die andere Festplatte 5 ist eine Abstützplatte für einen hydraulischen Schließzylinder 7, der die Festplatte 5 durchsetzt und dessen Kolben 9 eine Schließkraft auf eine bewegliche Formaufspannplatte 13 ausüben kann, die am Maschinenrahmen 1 längsverschieblich geführt ist. An den Formaufspannplatten 3, 13 sind die Spritzgießformwerkzeuge 15 befestigt, auf die mittels des Schließzylinders 7 eine Schließkraft ausgeübt wird, die entlang einer Schließkraftachse 11 wirkt, die vorzugsweise durch die geometrische Mitte der Festplatten 3, 5 und der verschiebbaren Formaufspannplatte 13 verläuft.

Die Schließkraft des Schließzylinders 7 wirkt auf die beiden Festplatten 3, 5 als eine sie auseinandertreibende Reaktionskraft. Um eine Auseinanderbewegung der Festplatten 3, 5 zu verhindern, sind diese durch vier L-förmige Zugglieder verbunden, von denen in Fig. 1 nur die beiden Zugglieder 17, 19 auf der vorderen Seite der Maschine sichtbar sind. Entsprechend sind zwei weitere L-förmige Zugglieder (in Fig. 1 nicht sichtbar) auf der hinteren Seite der Maschine angeordnet. Alle Zugglieder haben exakt gleiche Form und Abmessungen.

Jedes der Zugglieder ist L-förmig mit einem kürzeren vertikalen Schenkel und einem längeren horizontalen Schenkel. Das Zugglied 17 liegt näher an den Festplatten 3, 5 und kann deshalb als inneres Zugglied bezeichnet werden, während das Zugglied 19 an der Anßenseite des Zuggliedes 17 liegt und deshalb als äußeres Zugglied bezeichnet werden kann. Das innere Zugglied 17 ist am Ende seines lotrechten Schenkels mit einem Verbindungszapfen 21 oberhalb der Schließkraftachse 11 mit der Festplatte 5 verbunden und am Ende seines horizontalen Schenkels mit einem Zapfen 23 unterhalb der Schließkraftachse 11 mit der Festplatte 3 verbunden. Entsprechend ist das äußere L-förmige Zugglied 19 mit seinem lotrechten Schenkel mittels eines Zapfens 25 oberhalb der Schließkraftachse 11 mit der Festplatte 3 verbunden und am Ende seines waagerechten Schenkels mittels eines Zapfens 27 unterhalb der Schließkraftachse 11 mit der Festplatte 5 verbunden. Die Verbindungspunkte 21,23,25,27 haben vorzugsweise gleiche Abstände von der Schließkraftachse 11 und liegen vorzugsweise möglichst nahe an den oberen bzw. unteren Ecken der Festplatten 3, 5.

Das innere Zugglied 17 ist mit einer Ausnehmung 29 für den Durchtritt des Zapfens 27 vom äußeren Zugglied 19 zur Festplatte 5 versehen. Diese Ausnehmung 29 stellt eine Schwächung des inneren Zuggliedes 17 dar und beeinflußt daher seine Biege- und Zugsteifigkeit. Damit die Zugglieder 17, 19 exakt gleiche Verformungssteifigkeit behalten, ist auch das Zugglied 19 mit einer Ausnehmung 31 gleicher Form und Lage wie die Ausnehmung 29 versehen, obwohl diese Ausnehmung 31 keine Funktion für den Durchtritt eines Zapfens hat.

Auf der in Fig. 1 nicht sichtbaren hinteren Seite der Maschine sind zwei weitere Zugglieder in gleicher Anordnung vorgesehen, d. h. es sind insgesamt vier Zugglieder in symmetrischer Anordnung zu einer durch die Schließkraftachse 11 verlaufenden Vertikalebene vorgesehen. Durch die L-Form der Zugglieder wird erreicht, daß die Oberkante 33 der Zugglieder mindestens zwischen der beweglichen Formaufspannplatte und der festen Formaufspannplatte 3, vorzugsweise aber auf der gesamten Strecke zwischen den Festplatten 3, 5 tiefer liegt als die Schließkraftachse 11, so daß die Zugglieder 17, 19 den freien Zugang zu dem Raum zwischen den Festplatten 3, 5 und insbesondere den Zugriff eines Handlinggerätes zwischen die geöffneten Formwerkzeuge 15 nicht behindern. Vorzugsweise liegt die Oberkante 33 tiefer als die Unterkante der in den Formwerkzeugen 15 vorgesehenen Formkavitäten.

Die Zugglieder 17, 19 sind ausreichend groß und steif dimensioniert, damit sie unter dem Einfluß der von der Schließvorrichtung 7 ausgeübten Schließkraft eine möglichst geringe Verformung und Längenänderung erleiden. Durch die exakt gleiche Form und Dimensionierung aller vier Zugglieder wird erreicht, daß die durch die Verformung und Längenänderung der Zugglieder eintretende Abstandsänderung zwischen den Verbindungszapfen 21, 23 und den Verbindungszapfen 25, 27 exakt gleich ist, so daß die Festplatten 3, 5 ihre exakte Parallelität beibehalten.

Bei der beschriebenen Ausführungsform ist eine der Festplatten, nämlich die feststehende Formausspannplatte 3, am Maschinenrahmen 1 befestigt. Die andere Festplatte 5 ist, um geringfügige Bewegungen aufgrund der Längenänderung der Zugglieder 17, 19 zuzulassen, am Maschinenrahmen 1 verschiebbar z. B. mittels eines Gleitlagers (nicht dargestellt) gelagert. Die bewegliche Formausspannplatte 13 ist am Maschinenrahmen 1 z. B. mittels eines Rollenlagers (nicht dargestellt) verschiebbar gelagert.

Das innere Zugglied 17 und das äußere Zugglied 19 auf jeder Seite der Maschine sind bei der dargestellten Ausführungsform nicht miteinander verbunden. Bei einer geänderten Ausführungsform (nicht dargestellt) können sie in der Längsmitte ihrer horizontalen Schenkel durch einen Verbindungszapfen gelenkig miteinander verbunden sein.

Bei einer weiteren geänderten Ausführungsform, die in Fig. 1 gestrichelt angedeutet ist, besitzt das innere Zugglied 17 einen zum Maschinenrahmen 1 hin gerichteten Zapfen 35, der zwischen zwei Vertikalführungen 37 des Maschinenrahmens 1 so gefuhrt ist, daß er sich in Horizontalrichtung nicht verschieben kann. Bei dieser Ausführungsform bildet der vertikal geführte Zapfen 35 den eigentlichen Festpunkt am Maschinenrahmen 1. Es entfällt in diesem Fall die unverschiebbare Befestigung der festen Formaufspannplatte 3 am Maschinenrahmen 1, d. h. die feste Formaufspannplatte 3 ist in diesem Fall, ebenso wie die Abstützplatte 5, am Maschinenrahmen 1 mittels eines Gleitlagers so verschiebbar zu lagern, daß geringfügige Horizontalverschiebungen möglich sind.

## Patentansprüche

1. Formschließvorrichtung für eine Kunststofformmaschine mit einem Maschinenrahmen (1), zwei darauf abgestützten Festplatten (3, 5), die sich mit Abstand parallel gegenüberstehen, mindestens einer beweglichen Formaufspannplatte (13), die am Rahmen (1) verschiebbar geführt ist, mindestens einem Schließantrieb (7), der an einer der Festplatten (5) gelagert ist und die bewegliche Formaufspannplatte (13) mit einer entlang einer Schließkraftachse (11) wirkenden Schließkraft in Richtung auf die andere Festplatte (3) beaufschlagen kann, und vier Zuggliedern (17, 19) von gleicher Form und gleichen Abmessungen, die die beiden Festplatten (3, 5) zugfest miteinander verbinden und die vom Schließantrieb auf die beiden Festplatten ausgeübte Reaktionskraft aufnehmen, wobei jede Festplatte (3, 5) an zwei oberen Angriffspunkten (21, 25) und zwei unteren Angriffspunkten (23, 29), die oberhalb bzw. unterhalb der durch die Schließkraftachse (11) verlaufenden Horizontalebene liegen, mit den Zuggliedern (17, 19) verbunden ist, dadurch **gekennzeichnet,** daß jedes Zugglied (17, 19) mit einer der Festplatten (3, 5) an einem oberen Angriffspunkt (21, 25) und mit der anderen Festplatte (5, 3) an einem unteren Angriffspunkt (23, 29) verbunden ist.

2. Vorrichtung nach Anspruch 1, dadurch **gekennzeichnet,** daß die Zugglieder (17, 19) L-förmig ausgebildet sind mit einem im wesentlichen vertikalen Schenkel, der mit dem oberen Angriffspunkt (21, 25) verbunden ist, und einem im wesentlichen horizontalen Schenkel, der mit dem unteren Angriffspunkt (23, 27) verbunden ist, und daß die Oberkante (33) der Zugglieder (17, 19) mindestens in dem Bereich zwischen der feststehenden Formaufspannplatte (3) und der beweglichen Formaufspannplatte (13) tiefer liegt als eine durch die Schließkraftachse (11) verlaufende Horizontalebene.

3. Vorrichtung nach Anspruch 1 oder 2, dadurch **gekennzeichnet,** daß auf jeder Seite der Maschine ein inneres Zugglied (17), das den Festplatten (3, 5) näher liegt, und ein äußeres Zugglied auf der von den Festplatten (3, 5) abgewandten Seite des inneren Zuggliedes (17) vorgesehen ist, und daß im inneren Zugglied (17) eine Ausnehmung (29) für den Durchtritt eines das äußere Zugglied (19) mit einer Festplatte (5) verbindenden Zapfens (27) vorgesehen ist.

4. Vorrichtung nach Anspruch 3, dadurch **gekennzeichnet,** daß im äußeren Zugglied (19) eine Ausnehmung (31) von gleicher Größe und Lage wie die Ausnehmung (29) des inneren Zuggliedes (17) vorgesehen ist.

5. Vorrichtung nach Anspruch 2, dadurch **gekennzeichnet,** daß die beiden Zugglieder (17, 19) auf jeder Seite der Maschine in der Längsmitte ihrer horizontalen Schenkel durch ein Gelenk miteinander verbunden sind.

6. Vorrichtung nach einem der Ansprüche 1 bis 5, dadurch **gekennzeichnet,** daß auf jeder Seite der Maschine das den Maschinenrahmen (1) näherliegende Zugglied (17) am Maschinenrahmen (1) in Richtung der Schließkraftachse (11) unverschiebbar festgelegt ist.

7. Vorrichtung nach Anspruch 6, dadurch **gekennzeichnet,** daß ein vom Zugglied (17) in Richtung auf den Maschinenrahmen (1) vorstehender Zapfen (35) zwischen lotrechten Führungen (37) des Maschinenrahmens (1) vertikal beweglich geführt ist.

## Claims

1. Mould clamping device for a plastic moulding machine, with a machine frame (1), two fixed plates (3, 5) supported thereon spaced parallel opposite one another, at least one movable mould clamping plate (13), which is guided displaceably on the frame (1), at least one locking drive (7), which is disposed on one of the fixed plates (5) and is capable of subjecting the movable moulding clamping plate (13) to a locking force acting along one locking force axis (11) directed towards the other fixed plate (3), and four tension members (17, 19) of the same shape and dimensions, which connect the two fixed plates (3, 5) to one another against tension and absorb the reaction force exerted on the two fixed plates by the locking drive, whereby each fixed plate (3, 5) is connected to the tension members (17, 19) at two upper impact points (21, 25) and two lower impact points (23, 29) lying respectively above and below the horizontal plane extending through the locking force axis (11), characterised in that each tension member (17, 19) is connected to one of the fixed plates (3, 5) at an upper impact point (21, 25) and to the other fixed plate (5, 3) at a lower impact point (23, 29).

2. Device according to Claim 1, characterised in that the tension members (17, 19) are L-shaped with an essentially vertical leg connected to the upper impact point (21, 25), and an essentially horizontal leg connected to the lower impact point (23, 27), and that, at least in the region between the fixed mould clamping plate (3) and the movable mould clamping plate (13), the upper edge (33) of the tension members (17, 19) is located lower than a horizontal plane extending through the locking force axis (11).

3. Device according to Claim 1 or 2, characterised in that an inner tension member (17) lying closer to the fixed plates (3, 5) and an outer tension member on the side of the inner tension member (17) remote from the fixed plates (3, 5) are provided on each side of the machine, and that a recess (29) is provided in the inner tension member (17) for the passage of a pin (27) connecting the outer tension member (19) to a fixed plate (5).

4. Device according to Claim 3, characterised in that a recess (31) of the same size and position as the recess (29) of the inner tension member (17) is provided in the outer tension member (19).

5. Devise according to Claim 2, characterised in that the two tension members (17, 19) are connected to one another on each side of the machine in the longitudinal centre of their horizontal legs by a joint.

6. Device according to one of Claims 1 to 5, characterised in that on each side of the machine the tension member (17) lying closer to the machine frame (1) is fixed to the machine frame (1) to be non-displaceable in the direction of the locking force axis (11).

7. Device according to Claim 6, characterised in that a pin (35) protruding from the tension member (17) towards the machine frame (1) is disposed to be vertically movable between perpendicular guides (37) of the machine frame (1).

## Revendications

1. Dispositif de fermeture de moule pour une machine de moulage de matière plastique, comportant un bâti de machine (1), deux plateaux fixes (3, 5) qui s'y appuient et sont situés en face l'un de l'autre, parallèlement et à distance, au moins un plateau mobile (13) de bridage du moule, guidé, avec liberté de coulissement, sur le bâti (1), au moins un mécanisme de fermeture (7) qui est porté sur l'un des plateaux fixes (5) et peut contraindre le plateau mobile (13) de bridage du moule par une force de fermeture agissant selon un axe de la force de fermeture (11), en direction de l'autre plateau fixe (3), ainsi que quatre tirants (17, 19), de même forme et de même dimensions, qui relient l'un à l'autre les deux plateaux fixes (3, 5) avec résistance à la traction et reprennent la force de réaction exercée par le mécanisme de fermeture sur les deux plateaux fixes, dans lequel chaque plateau fixe (3, 5) est relié aux tirants (17, 19) en deux points d'application supérieurs (21, 25) et deux points d'application inférieurs (23, 29) qui sont situés au-dessus et au-dessous du plan horizontal passant par l'axe de la force de fermeture (11), caractérisé par le fait que chaque tirant (17, 19) est relié à l'un des plateaux fixes (3, 5) en un point d'application supérieur (21, 25) et à l'autre plateau fixe (5, 3) en un point d'application inférieur (23, 29).

2. Dispositif selon la revendication 1, caractérisé par le fait que les tirants (17, 19) sont en forme de L, avec une branche sensiblement verticale qui est reliée au point d'application supérieur (21, 25) et une branche sensiblement horizontale qui est reliée au point d'application inférieur (23, 27) et que le bord supérieur (33) des tirants (17, 19) se trouve, au moins dans la zone située entre le plateau fixe (3) de bridage du moule et le plateau mobile (13) de bridage du moule, plus bas qu'un plan horizontal passant par l'axe de la force de fermeture (11).

3. Dispositif selon la revendication 1 ou 2, caractérisé par le fait que de chaque côté de la machine sont prévus un tirant intérieur (17) situé plus près des plateaux fixes (3, 5) et un tirant extérieur situé du côté du tirant intérieur opposé aux plateaux fixes (3, 5), et que dans le tirant intérieur (17) est prévu un évidement (29) pour le passage d'un ergot (27) reliant le tirant extérieur (19) à un plateau fixe (5).

4. Dispositif selon la revendication 3, caractérisé par le fait que dans le tirant extérieur (19) est prévu un évidement (31) de même dimension et position que l'évidement (29) du tirant intérieur (17).

5. Dispositif selon la revendication 2, caractérisé par le fait que, de chaque côté de la machine, au milieu longitudinal de leur branche horizontale, les deux tirants (17, 19) sont reliés l'un à l'autre par une articulation.

6. Dispositif selon l'une des revendications 1 à 5, caractérisé par le fait que de chaque côté de la machine, le tirant (17) situé le plus prêt du bâti (1) est fixé au bâti (1) sans liberté de coulissement selon la direction de l'axe de la force de fermeture (11).

7. Dispositif selon la revendication 6, caractérisé par le fait qu'un ergot (35) qui saille du tirant (17) en direction du bâti (1) est guidé, avec liberté de mouvement vertical, entre des guidages verticaux (37) du bâti (1).
